# DEMANDE DE BREVET EUROPEEN

(11) **EP 4 610 102 A1**
(43) Date de publication de la demande: **03.09.2025**
(21) Numéro de dépôt: 25159812.4
(22) Date de dépôt: 25.02.2025
(51) Int. Cl.: B60N 2/50, B60N 2/52, B60N 2/54

(54) **ELÉMENT DE SUPPORT DE SIÈGE COMPRENANT DES AMORTISSEURS EXTÉRIEURS**

(30) Priorité: 28.02.2024 FR 2401972
(71) Demandeur: FAURECIA Sièges d'Automobile, 92000 Nanterre (FR)
(72) Inventeur: SEILLE, Sébastien, 91640 BRIIS-SOUS-FORGES (FR); EL FESSI, Mounir, 94230 CACHAN (FR)
(74) Mandataire: Lavoix

(57) **Abrégé**

Elément de support (5) de siège comprenant une base (7) et une armature mobile (9) par rapport à la base (7) selon une direction d'élévation (Z), la base s'étendant entre deux bords inférieurs latéraux s'étendant selon une direction longitudinale (L) perpendiculaire à la direction d'élévation, l'armature mobile (9) s'étendant entre deux bords supérieurs latéraux (14, 15) s'étendant selon la direction longitudinale et s'étendant en regard respectivement des deux bords inférieurs latéraux selon la direction d'élévation.
L'élément de support (5) comprend deux amortisseurs (50) reliant chacun l'un des deux bords latéraux inférieurs au bord latéral supérieur en regard (14, 15), chaque amortisseur (50) s'étendant selon une direction inclinée formant un angle non nul avec la direction d'élévation.

## Description

La présente invention concerne un élément de support de siège de véhicule du type comprenant une base fixe destinée à être fixée au plancher du véhicule, et une armature mobile mobile par rapport à la base selon une direction d'élévation, la base s'étendant entre deux bords inférieurs latéraux s'étendant selon une direction longitudinale perpendiculaire à la direction d'élévation et étant opposés selon une direction transversale perpendiculaire à la direction d'élévation et à la direction longitudinale, l'armature mobile s'étendant entre deux bords supérieurs latéraux s'étendant selon la direction longitudinale et étant opposés selon la direction transversale, les deux bords supérieurs latéraux s'étendant en regard respectivement des deux bords inférieurs latéraux selon la direction d'élévation.

Le confort des sièges pour les occupants d'un véhicule est primordial pour un utilisateur qui souhaite bénéficier d'une expérience satisfaisante lors de l'utilisation du véhicule.

Afin d'augmenter le confort, la stabilité, et l'amortissement des chocs, il est connu de prévoir un élément de support de siège particulier, pour former une partie de l'assise du siège.

Cet élément de support est placé directement sous le siège, entre la matelassure de l'assise de siège et le plancher du véhicule, et a par exemple pour fonction de permettre un réglage de la hauteur du siège en fonction de l'occupant, de compenser le poids de l'occupant lorsque celui-ci s'assied sur le siège, ou encore d'amortir les chocs pour l'occupant lorsque le véhicule est en fonctionnement et roule par exemple sur une chaussée irrégulière.

A cet effet, il est notamment connu de placer un amortisseur au centre de l'élément de support, s'étendant entre une armature mobile et une base de l'élément de support, selon une direction d'élévation, par exemple correspondant à une direction plancher-plafond du véhicule, afin de filtrer les irrégularités de la chaussée et d'éviter la propagation des chocs pour l'occupant.

En revanche, le volume disponible limité à l'intérieur du véhicule est une contrainte que doivent respecter tous les éléments du véhicule, y compris ceux œuvrant pour le confort des passagers.

En particulier, il est nécessaire de prévoir un élément de support dont la hauteur, prise selon la direction d'élévation, soit minimale afin de ne pas encombrer l'habitacle du véhicule, ce qui n'est pas le cas avec un amortisseur tel que décrit ci-dessus.

L'un des buts de l'invention est alors de proposer un élément de support de siège de véhicule permettant d'amortir les chocs, dont la hauteur est minimisée.

A cet effet, l'invention a pour objet un élément de support de siège de véhicule qui comprend deux amortisseurs reliant chacun l'un des deux bords latéraux inférieurs au bord latéral supérieur en regard, chaque amortisseur s'étendant selon une direction inclinée formant un angle non nul avec la direction d'élévation.

Les amortisseurs reliant l'armature mobile à la base de manière inclinée par rapport à la direction d'élévation, il est possible de garder une course d'amortissement satisfaisante pour amortir les secousses et éviter la propagation des chocs pour l'occupant, tout en limitant la hauteur des amortisseurs et donc de l'élément de support.

Ainsi, l'élément de support présente une hauteur minimale tout en assurant le confort de l'occupant du siège.

Suivant d'autres aspects avantageux de l'invention, l'élément de support comprend une ou plusieurs des caractéristiques suivantes, prises isolément ou suivant toutes les combinaisons techniquement possibles :
- chaque amortisseur s'étend selon une direction inclinée formant un angle avec la direction d'élévation compris entre 10° et 80°, encore de préférence compris entre 30° et 60°, par exemple sensiblement égal à 60° dans la position de l'amortisseur la plus inclinée par rapport à la direction d'élévation ;
- chaque amortisseur comprend une extrémité supérieure liée au bord latéral supérieur et une extrémité inférieure liée au bord latéral inférieur, la liaison de chaque extrémité au bord latéral correspondant étant une liaison pivot autour d'un axe de rotation s'étendant selon la direction transversale ;
- les deux amortisseurs sont disposés symétriquement dans l'élément de support par rapport à un plan médian perpendiculaire à la direction transversale et s'étendant à égale distance de chacun des bords supérieurs latéraux ;
- les deux amortisseurs s'étendent depuis un flanc arrière de la base jusqu'à un flanc avant de l'armature mobile, le flanc arrière de la base étant écarté du flanc avant de l'armature mobile selon la direction longitudinale ;
- les deux amortisseurs sont des actionneurs linéaires tels que des vérins pneumatiques ou hydrauliques ;
- l'élément de support comprend un système de déplacement de l'armature mobile par rapport à la base, le système de déplacement étant disposé entre l'armature mobile et la base selon la direction d'élévation et entre chaque amortisseur selon la direction transversale ;
- le système de déplacement comprend au moins une unité de déplacement comprenant un ressort s'étendant selon la direction longitudinale et deux barres de liaison croisées s'étendant chacune entre une extrémité supérieure fixée par une liaison pivot à l'armature mobile et une extrémité inférieure fixée par une liaison pivot à la base, une extrémité libre de chaque ressort étant liée à l'extrémité supérieure d'au moins une barre de liaison ;
- l'élément de support comprend deux unités de déplacement disposées symétriquement dans l'élément de support par rapport à un plan médian perpendiculaire à la direction transversale et s'étendant à égale distance de chacun des bords supérieurs latéraux ;
- l'élément de support comprend un dispositif d'actionnement manuel ou motorisé du déplacement de l'armature mobile par rapport à la base, l'actionnement dudit dispositif d'actionnement entraînant une compression ou une extension du ou de chaque ressort.

L'invention concerne également un siège de véhicule comprenant un élément de support selon l'une quelconque des revendications précédentes, l'armature mobile de l'élément de support formant une partie d'une assise du siège mobile selon la direction d'élévation par rapport à la base.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique d'un siège de véhicule comprenant un élément de support selon l'invention,
[Fig. 2] la figure 2 est une vue en perspective de l'élément de support selon l'invention,
[Fig. 3] la figure 3 est une vue en perspective de l'élément de support de la figure 1, focalisée sur un système de déplacement de l'élément de support, et
[Fig. 4] la figure 4 est une vue en perspective de l'élément de support de la figure 1, focalisée sur un amortisseur de l'élément de support.

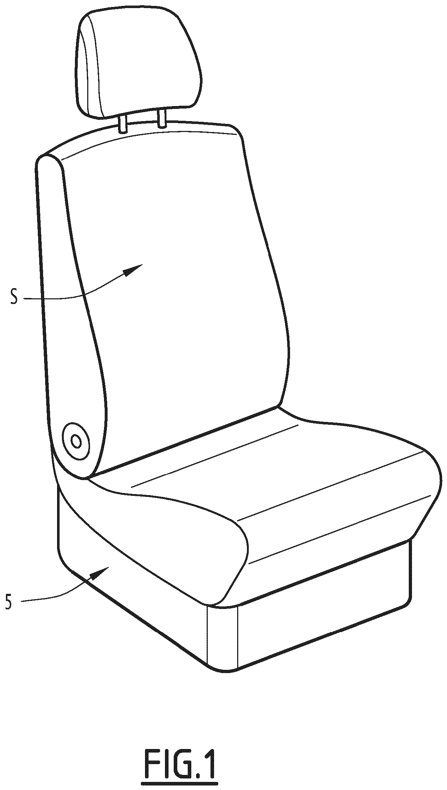

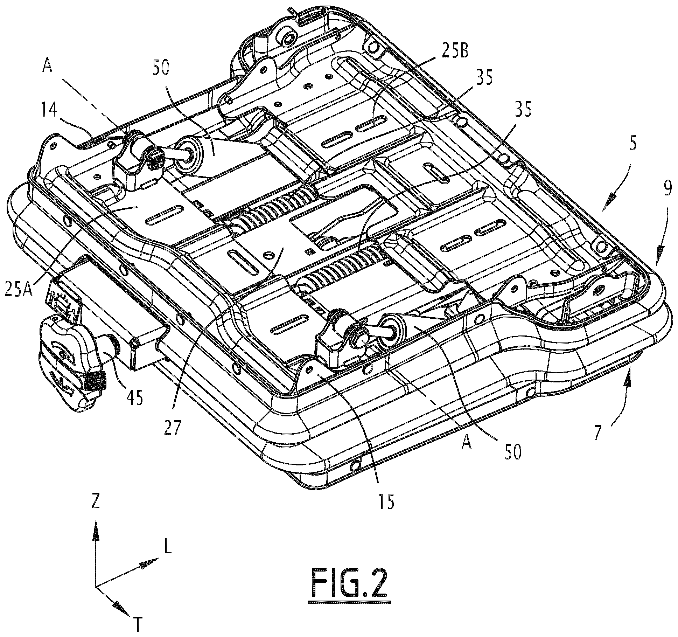

En référence aux Figs. 1 et 2, on décrit un élément de support 5 de siège S de véhicule comprenant une base fixe 7 et une armature mobile 9 (visibles sur la Fig. 2).

La base 7 est par exemple une base du siège S de véhicule destinée à être montée sur le plancher du véhicule par exemple par l'intermédiaire d'un système de glissières permettant de déplacer le siège S selon une direction de coulissement correspondant par exemple à une direction longitudinale L du véhicule, c'est-à-dire la direction avant-arrière du véhicule.

L'armature mobile 9 s'étend en regard de la partie inferieure 7 selon une direction d'élévation Z, correspondant par exemple à la direction plancher-plafond du véhicule, et est mobile par rapport à la base 7 selon la direction d'élévation Z, de sorte à permettre le réglage de la position relative de l'armature mobile 9 et de la base 7. Un tel réglage est un réglage en hauteur de la position de l'armature mobile 9.

Dans un exemple particulier de réalisation, illustré sur la Fig. 1, l'armature mobile 9 forme une partie d'une assise du siège S sur laquelle un occupant du siège s'assied lorsqu'il prend place dans le véhicule. Dans ce cas, l'armature mobile 9 est par exemple destinée à recevoir une matelassure agencée pour accueillir l'occupant du siège S.

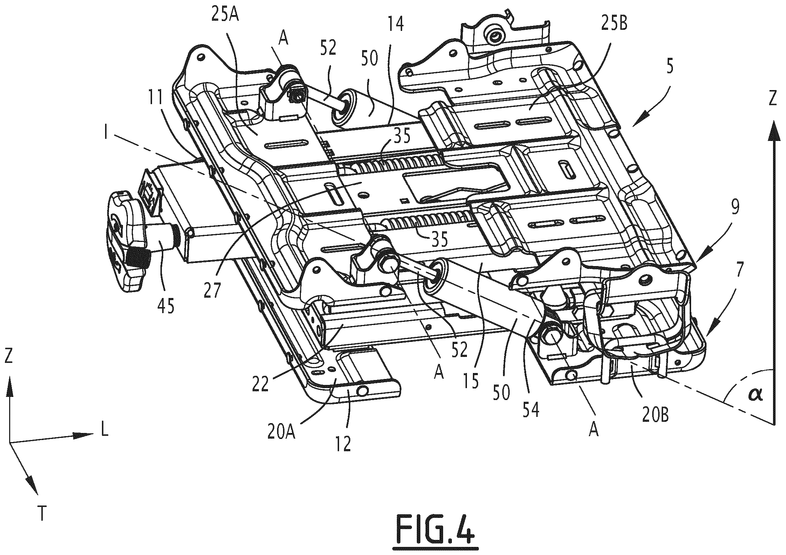

La base 7 s'étend entre deux bords inférieurs latéraux 11, 12, (visibles uniquement sur la Fig.4), s'étendant selon la direction longitudinale L et étant écartés l'un de l'autre selon une direction transversale T perpendiculaire à la direction d'élévation Z et à la direction longitudinale L.

La direction transversale T correspond par exemple à la direction gauche-droite du véhicule ou encore à la largeur du véhicule.

De manière similaire, l'armature mobile 9 s'étend entre deux bords supérieurs latéraux 14, 15 (visibles sur les Figs. 2 et 4) s'étendant selon la direction longitudinale L et étant écartés l'un de l'autre selon la direction transversale T.

Les deux bords supérieurs latéraux 14, 15 s'étendent en regard respectivement des deux bords inférieurs latéraux 11, 12 selon la direction d'élévation Z.

Selon le mode de réalisation représenté sur la Fig. 2, la base 7 est formée par un flanc avant 20A et un flanc arrière 20B, les flancs avant 20A et arrière 20B étant écartés l'un de l'autre selon la direction longitudinale L et s'étendant principalement selon la direction transversale T. Les deux flancs 20A, 20B sont par exemple solidarisés l'un à l'autre par au moins une traverse inférieure 22 s'étendant selon la direction longitudinale L.

Dans une variante, non représentée, la base 7 est formée par un seul flanc.

Les deux bords inférieurs latéraux 11, 12 sont alors définis comme l'ensemble des bords longitudinaux des flancs 20A, 20B, et de la traverse inférieure 22, c'est-à-dire les bords s'étendant selon la direction longitudinale L et écartés les uns des autres selon la direction transversale T.

De manière similaire, l'armature mobile 9 est par exemple formée par un flanc avant 25A et un flanc arrière 25B, les flancs avant 25A et arrière 25B s'étendant principalement selon la direction transversale T et étant écartés l'un de l'autre selon la direction longitudinale L. Les deux flancs 25A, 25B sont par exemple solidarisés l'un à l'autre par au moins une traverse supérieure 27 s'étendant selon la direction longitudinale L.

L'armature mobile 9 comprend en particulier tout élément mobile par rapport à la base 7, selon la direction d'élévation Z. Ainsi, les flancs avant 25A et arrière 25B, ainsi que la traverse supérieure 27 sont mobiles par rapport à la base 7, selon la direction d'élévation Z.

Dans une variante, non représentée, l'armature mobile 9 est formée par un seul flanc.

Les deux bords supérieurs latéraux 14, 15 sont alors définis sont définis comme l'ensemble des bords longitudinaux des flancs 25A, 25B et de la traverse supérieure 27, c'est-à-dire les bords s'étendant selon la direction longitudinale L et écartés les uns des autres selon la direction transversale T.

Les flancs 25A, 25B de l'armature mobile 9 s'étendent au moins en partie en regard des flancs 20A, 20B de la base 7 et sont espacés de ceux-ci, selon une distance modulable prise selon la direction d'élévation Z.

De même, la traverse supérieure 27 s'étend au moins en partie en regard de la traverse inférieure 22 et est espacée de celle-ci, selon une distance modulable prise selon la direction d'élévation Z.

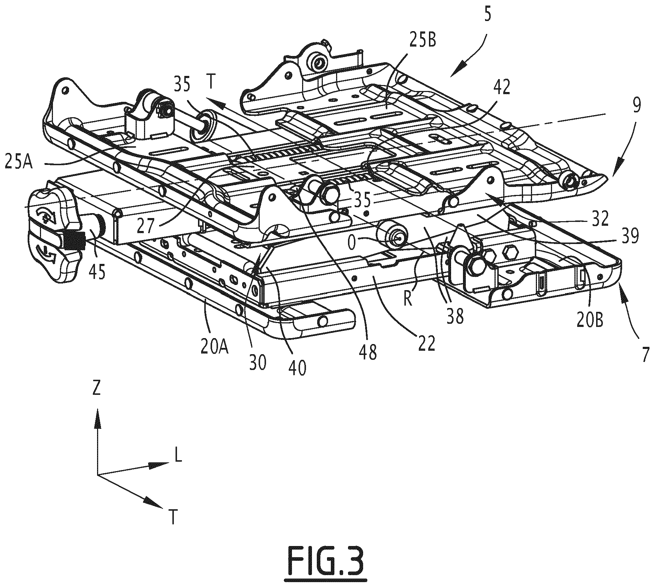

Dans un mode particulier de réalisation, et en référence à la Fig. 3, l'élément de support 5 comprend un système de déplacement 30 de l'armature mobile 9 par rapport à la base 7.

Le système de déplacement 30 est agencé pour permettre le déplacement de l'armature mobile 9 par rapport à la base 7, par exemple selon la direction d'élévation Z. En d'autres termes, selon le mode de réalisation représenté sur les figures, le système de déplacement 30 permet de régler la hauteur de l'assise du siège S et/ou de compenser le poids d'un occupant lorsque celui-ci s'assied sur le siège S.

Tel que représenté sur la Fig. 3, le système de déplacement 30 est disposé entre l'armature mobile 9 et la base 7 selon la direction d'élévation Z.

De préférence, le système de déplacement 30 comprend au moins une unité de déplacement 32 comprenant un ressort 35 s'étendant selon la direction longitudinale L et deux barres de liaison 38 croisées s'étendant chacune entre une extrémité supérieure 39, fixée par une liaison pivot à l'armature mobile 9, et une extrémité inférieure 40, fixée par une liaison pivot à la base 7.

Chaque liaison pivot s'étend par exemple de manière sensiblement transversale, c'est-à-dire que la rotation permise par cette liaison pivot se fait autour d'un axe de rotation s'étendant selon la direction transversale T.

En particulier, les extrémités supérieures 39 des barres de liaison 38 sont fixées par une liaison pivot aux flancs 25A, 25B de l'armature mobile 9 et les extrémités inférieures 40 des barres de liaison 38 sont fixées par une liaison pivot aux flancs 20A, 20B de la base 7.

Par « croisées » on entend que chaque barre de liaison 38 lie un bord supérieur latéral 14, 15 au bord inférieur latéral 11, 12 en formant un X avec l'autre barre de liaison 38. En d'autres termes, en suivant la direction longitudinale L, une première barre de liaison 38 lie le bord supérieur latéral 14, 15 au bord inférieur latéral 11, 12, et une deuxième barre de liaison 38 lie le bord inférieur latéral 11, 12 au bord supérieur latéral 14, 15, les barres de liaison se croisant entre ces bords latéraux inférieurs 11, 12 et supérieurs 14, 15.

Les deux barres de liaison 38 sont fixées l'une à l'autre en leur centre O et sont mobiles en rotation l'une par rapport à l'autre selon un axe de rotation R transversal passant par le centre O.

Ainsi, dans un plan contenant la direction d'élévation Z et la direction longitudinale L, les deux barres de liaison 38 forment un angle non nul entre elle.

Une première extrémité libre 42 du ressort est liée à l'extrémité supérieure 39 d'au moins une barre de liaison 38.

Dans l'exemple représenté sur les Figs. 2 à 4, le système de déplacement 30 comprend deux unités de déplacement 32 disposées symétriquement dans l'élément de support 5 par rapport à un plan médian perpendiculaire à la direction transversale T et s'étendant à égale distance de chacun des bords supérieurs latéraux 14, 15.

De préférence, l'élément de support 5 comprend un dispositif d'actionnement 45 manuel ou motorisé du déplacement de l'armature mobile 9 par rapport à la base 7.

Par exemple, le dispositif d'actionnement 45 est une molette manuellement entrainée en rotation par un utilisateur. En variante, le dispositif d'actionnement 45 est un dispositif motorisé apte à, sur commande d'un utilisateur, comprimer ou détendre le ou chaque ressort 35.

L'actionnement dudit dispositif d'actionnement 45 entraîne une compression ou une extension du ou de chaque ressort 35.

A cet effet, le dispositif d'actionnement 45 est par exemple lié à une deuxième extrémité libre 48 du ou de chaque ressort 35, opposée à la première extrémité libre 42 du ou de chaque ressort 35 selon la direction longitudinale L.

Ainsi, lors de l'actionnement du dispositif d'actionnement 45, le ou chaque ressort 35 est compressé ou étendu, par poussée ou par traction sur la deuxième extrémité libre 48 du ou de chaque ressort 35, et transmet les efforts qui lui sont imposés aux barres de liaison 38 croisées.

De par les liaisons pivots fixant leurs extrémités supérieures 39 à l'armature mobile 9 et leurs extrémités inférieures 40 à la base 7, les barres de liaison 38 sont agencées pour se déplacer l'une par rapport à l'autre, en modifiant l'angle formé entre elles, de manière à déplacer l'armature mobile 9 relativement à la base 7 selon la direction d'élévation Z.

En d'autres termes, les barres de liaison 38 sont entrainées en rotation autour de l'axe de rotation R, et entrainent, par les liaisons pivots à leurs extrémités supérieures 39, l'armature mobile 9 en translation selon la direction d'élévation Z.

La hauteur relative, prise selon la direction d'élévation Z, du siège S est alors réglée et ajustée par et/ou pour l'occupant.

De manière similaire, lorsqu'un utilisateur s'assied sur l'assise de siège S par exemple formée par l'armature mobile 9 de l'élément de support 5, les ressorts 35 sont agencés pour maintenir les barres de liaison 38 immobiles, c'est-à-dire pour maintenir l'angle qu'elles forment entre elle fixe, afin de ne pas déplacer l'armature mobile 9 relativement à la base 7 lorsque l'utilisateur s'assied.

Ainsi, un tel système de déplacement 30 permet de contrebalancer le poids de l'utilisateur qui s'assied sur le siège S, afin que le siège S reste à la hauteur désirée.

Selon l'invention, et en référence à la Fig. 4, l'élément de support 5 comprend deux amortisseurs 50 reliant chacun l'un des deux bords latéraux inférieurs 11, 12 au bord latéral supérieur 14, 15 en regard.

La présence de deux amortisseurs 50 permet d'améliorer le confort de l'occupant, et notamment de réduire les vibrations transmises par le véhicule à l'occupant assis sur le siège S.

Chaque amortisseur 50 s'étend selon une direction inclinée I formant un angle non nul avec la direction d'élévation Z.

En particulier, chaque amortisseur 50 s'étend selon une direction inclinée I formant un angle α avec la direction d'élévation Z compris entre 10° et 80°, encore de préférence compris entre 30° et 60°, par exemple sensiblement égal à 60° dans la position de l'amortisseur 50 la plus inclinée par rapport à la direction d'élévation Z comme représenté sur la Fig. 4.

Les amortisseurs 50 s'étendant de manière inclinée et non parallèlement à la direction d'élévation Z, ils assurent un confort optimal pour l'occupant du siège S car ils conservent une bonne amplitude de course, voire meilleure, pour compenser les chocs selon la direction d'élévation Z dus à l'irrégularité de la chaussée, tout en minimisant la hauteur nécessaire sous le siège S afin de placer l'élément de support 5.

Les deux amortisseurs 50 sont par exemple des actionneurs linéaires tels que des vérins pneumatiques, hydrauliques, ou encore électriques, aptes à convertir une énergie quelconque (provenant des chocs dus aux irrégularité de la chaussée par exemple) en énergie mécanique de translation. Ainsi, les amortisseurs 50 génèrent un mouvement dissipatif, tel qu'un rebond, qui se propage, tel qu'il sera décrit ultérieurement, jusqu'à l'occupant et qui reste confortable pour l'occupant du véhicule.

Dans l'exemple de la Fig. 4, chaque amortisseur 50 comprend une extrémité supérieure 52 liée au bord latéral supérieur 14, 15 et une extrémité inférieure 54 liée au bord latéral inférieur 11, 12.

Dans le mode de réalisation représenté sur les Figs. 2 à 4, chaque amortisseur 50 s'étend depuis le flanc arrière 20B de la base 7 jusqu'au flanc avant 25A de l'armature mobile 9.

En variante, non représentée, chaque amortisseur 50 s'étend depuis le flanc avant 20A de la base 7 jusqu'au flanc arrière 25B de l'armature mobile 9.

La liaison de chaque extrémité 52, 54 au bord latéral 11, 12, 14, 15 correspondant est une liaison pivot autour d'un axe de rotation A s'étendant selon la direction transversale T.

Les liaisons pivots permettent l'articulation de chaque amortisseur 50 relativement à l'armature mobile 9 et à la base 7 afin que chaque amortisseur 50 puisse transmettre un mouvement linéaire en un mouvement de translation de l'armature mobile 9 selon la direction d'élévation Z.

Ainsi, de la même manière que précédemment, chaque amortisseur 50 est agencé pour, lors de l'absorption d'un choc, se compresser ou s'étendre selon la direction inclinée I, entrainant, par les liaisons pivots fixant les extrémités 52, 54 aux bords latéraux 11, 12, 14, 15, l'armature mobile 9 en translation selon la direction d'élévation Z.

En outre, les liaisons pivots permettent l'articulation de chaque amortisseur 50 relativement à l'armature mobile 9 et à la base 7 afin que chaque amortisseur 50 puisse s'adapter à la position de l'armature mobile 9 relativement à la base 7 lorsqu'un occupant du siège S règle la hauteur de l'armature mobile 9.

Chaque amortisseur 50 présente par exemple une course, prise selon la direction inclinée I, comprise entre ± 20 mm et ± 40 mm.

Dans un exemple particulier de réalisation, les deux amortisseurs 50 sont disposés symétriquement dans l'élément de support 5 par rapport à un plan médian perpendiculaire à la direction transversale T et s'étendant à égale distance de chacun des bords supérieurs latéraux 14, 15.

Cette symétrie permet de rigidifier l'élément de support 5 selon la direction transversale T, afin d'améliorer le confort de l'occupant et d'offrir une meilleure stabilité de l'élément de support 5.

Dans le mode de réalisation illustré sur les Figs. 2 à 4, le système de déplacement 30 est disposé entre chaque amortisseur 50 selon la direction transversale T.

Les amortisseurs 50 étant disposés à l'extérieur du système de déplacement 30, selon la direction transversale T, il est possible d'intégrer un système de déplacement 30 standard dans l'élément de support 5. Cela permet de réduire les coûts de fabrication de l'élément de support 5, qui peut par exemple réutiliser un système de déplacement 30 déjà existant.

Le siège S peut par ailleurs présenter un aspect tout à fait satisfaisant et classique tout en offrant un confort optimal pour l'occupant du véhicule, sans encombrer particulièrement l'élément de support 5.

Par ailleurs, la présence de deux amortisseurs 50 latéraux permet une meilleure marge de sécurité lors des tests de collision et de réglementation fréquemment menés sur les composants des véhicules, et en particulier sur les sièges et/ou supports de sièges des véhicules.

Un tel élément de support 5 présente de nombreux avantages.

Les amortisseurs 50 reliant l'armature mobile 9 à la base 7 de manière inclinée par rapport à la direction d'élévation Z, il est possible de garder une course d'amortissement satisfaisante pour amortir les secousses et éviter la propagation des chocs pour l'occupant, tout en limitant la hauteur des amortisseurs 50 et donc de l'élément de support 5.

Ainsi, l'élément de support 5 présente une hauteur minimale tout en assurant le confort des occupants des sièges du véhicule.

De plus, les amortisseurs 50 étant situés à l'extérieur, selon la direction transversale T, du système de déplacement 30 et étant fixés aux parties supérieure 9 et inférieure 7 de l'élément de support 5, les amortisseurs 50 sont complètement indépendants du système de déplacement 30.

Cela permet de réutiliser des systèmes de déplacement 30 classiques déjà existants et performants, afin de les intégrer à l'élément de support 5, et d'y ajouter les amortisseurs 50. Le coût de fabrication de l'élément de support 5 est alors réduit.

La symétrie latérale de l'élément de support 5, en particulier apportée par la symétrie des deux amortisseurs 50 offre à l'élément de support une meilleure stabilité et permet de rigidifier l'élément de support 5 latéralement afin d'éviter tout jeu qui pourrait s'avérer inconfortable pour l'occupant du siège.

## Revendications

1. Elément de support (5) de siège (S) de véhicule comprenant une base (7) fixe destinée à être fixée au plancher du véhicule, et une armature mobile (9) mobile par rapport à la base (7) selon une direction d'élévation (Z), la base (7) s'étendant entre deux bords inférieurs latéraux (11, 12) s'étendant selon une direction longitudinale (L) perpendiculaire à la direction d'élévation (Z) et étant opposés selon une direction transversale (T) perpendiculaire à la direction d'élévation (Z) et à la direction longitudinale (L), l'armature mobile (9) s'étendant entre deux bords supérieurs latéraux (14, 15) s'étendant selon la direction longitudinale (L) et étant opposés selon la direction transversale (T), les deux bords supérieurs latéraux (14, 15) s'étendant en regard respectivement des deux bords inférieurs latéraux (11, 12) selon la direction d'élévation (Z), **caractérisé en ce que** l'élément de support (5) comprend deux amortisseurs (50) reliant chacun l'un des deux bords latéraux inférieurs (11, 12) au bord latéral supérieur en regard (14, 15), chaque amortisseur (50) s'étendant selon une direction inclinée (I) formant un angle (α) non nul avec la direction d'élévation (Z).

2. Elément de support (5) selon la revendication 1, dans lequel chaque amortisseur (50) s'étend selon une direction inclinée (I) formant un angle (α) avec la direction d'élévation (Z) compris entre 10° et 80°, encore de préférence compris entre 30° et 60°, par exemple sensiblement égal à 60° dans la position de l'amortisseur (50) la plus inclinée par rapport à la direction d'élévation (Z).

3. Elément de support (5) selon la revendication 1 ou 2, dans lequel chaque amortisseur (50) comprend une extrémité supérieure (52) liée au bord latéral supérieur (14, 15) et une extrémité inférieure (54) liée au bord latéral inférieur (11, 12), la liaison de chaque extrémité (52, 54) au bord latéral (11, 12, 14, 15) correspondant étant une liaison pivot autour d'un axe de rotation (R) s'étendant selon la direction transversale (T).

4. Elément de support (5) selon l'une quelconque des revendications précédentes, dans lequel les deux amortisseurs (50) sont disposés symétriquement dans l'élément de support (5) par rapport à un plan médian perpendiculaire à la direction transversale (T) et s'étendant à égale distance de chacun des bords supérieurs latéraux (14, 15).

5. Elément de support (5) selon l'une quelconque des revendications précédentes, dans lequel les deux amortisseurs (50) s'étendent depuis un flanc arrière (20B) de la base (7) jusqu'à un flanc avant (25A) de l'armature mobile (9), le flanc arrière (20B) de la base (7) étant écarté du flanc avant (25A) de l'armature mobile (9) selon la direction longitudinale (L).

6. Elément de support (5) selon l'une quelconque des revendications précédentes, dans lequel les deux amortisseurs (50) sont des actionneurs linéaires tels que des vérins pneumatiques ou hydrauliques.

7. Elément de support (5) selon l'une quelconque des revendications précédentes, comprenant un système de déplacement (30) de l'armature mobile (9) par rapport à la base (7), le système de déplacement (30) étant disposé entre l'armature mobile (9) et la base (7) selon la direction d'élévation (Z) et entre chaque amortisseur (50) selon la direction transversale (T).

8. Elément de support (5) selon la revendication 7, dans lequel le système de déplacement (30) comprend au moins une unité de déplacement (32) comprenant un ressort (35) s'étendant selon la direction longitudinale (L) et deux barres de liaison (38) croisées s'étendant chacune entre une extrémité supérieure (39) fixée par une liaison pivot à l'armature mobile (9) et une extrémité inférieure (40) fixée par une liaison pivot à la base (7), une extrémité libre (42) de chaque ressort (35) étant liée à l'extrémité supérieure (39) d'au moins une barre de liaison (38).

9. Elément de support (5) selon la revendication 8, comprenant deux unités de déplacement (32) disposées symétriquement dans l'élément de support (5) par rapport à un plan médian perpendiculaire à la direction transversale (T) et s'étendant à égale distance de chacun des bords supérieurs latéraux (14, 15).

10. Elément de support (5) selon la revendication 8 ou 9, comprenant un dispositif d'actionnement (45) manuel ou motorisé du déplacement de l'armature mobile (9) par rapport à la base (7), l'actionnement dudit dispositif d'actionnement (45) entraînant une compression ou une extension du ou de chaque ressort (35).

11. Siège (S) de véhicule comprenant un élément de support (5) selon l'une quelconque des revendications précédentes, l'armature mobile (9) de l'élément de support (5) formant une partie d'une assise du siège (S) mobile selon la direction d'élévation (Z) par rapport à la base (7).
